**Europäisches Patentamt**

**European Patent Office**

**Office européen des brevets**

(19)

(11) Veröffentlichungsnummer: **0 088 819**
**A1**

(12) ## EUROPÄISCHE PATENTANMELDUNG

(21) Anmeldenummer: **82103001.2**

(22) Anmeldetag: **08.04.82**

(51) Int. Cl.³: **F 01 D 17/14**
**F 16 K 47/00, F 16 K 31/122**

(30) Priorität: **17.03.82 CH 1665/82**

(43) Veröffentlichungstag der Anmeldung:
**21.09.83 Patentblatt 83/38**

(84) Benannte Vertragsstaaten:
**AT BE CH DE FR GB IT LI LU NL SE**

(71) Anmelder: **GEBRÜDER SULZER**
**AKTIENGESELLSCHAFT**
**Zürcherstrasse 9**
**CH-8401 Winterthur(CH)**

(72) Erfinder: **Baumeler, Markus**
**Agnesstrasse 44**
**CH-8406 Winterthur(CH)**

(74) Vertreter: **Dipl.-Ing. H. Marsch Dipl.-Ing. K. Sparing**
**Dipl.-Phys.Dr. W.H. Röhl Patentanwälte**
**Rethelstrasse 123**
**D-4000 Düsseldorf(DE)**

(54) **Pneumatischer Stellmotor.**

(57) Der Stellmotor weist einen in einem Zylinder (4) gleitenden Kolben (6) auf, an dem eine die Stirnfläche (10) des Zylinders durchdringende Kolbenstange (8) befestigt ist. Auf der einen Zylinderseite ist ein Totraum (32, 34) vorgesehen, der grösser ist als das angrenzende, vom Kolben (6) bestrichene Hubvolumen. Der Totraum (32, 34) ist über je ein Steuerventil (20, 29) mit einer Druckmittelquelle bzw. einer Druckmittelsenke verbunden. Der Totraum ist durch eine Einschnürung (F) in eine kleinere, dem Kolben (6) nahe Kammer (32) und eine grössere, dem Kolben ferne Kammer (34) unterteilt. Die Einschnürung ist als Drosselöffnung ausgebildet, die bezüglich Widerstand eines gegebenen Mengenstroms durchströmender Luft einem freien Querschnitt von nicht mehr als $F_{id}=0,02D^2$ gleichwertig ist, wobei D der Durchmesser des Zylinders (4) bedeutet.

Fig. 2

EP 0 088 819 A1

P.5706

Gebrüder Sulzer Aktiengesellschaft, Winterthur / Schweiz

Pneumatischer Stellmotor

Die Erfindung betrifft einen pneumatischen Stellmotor nach dem Oberbegriff des Anspruchs 1. Es ist ein solcher Stellmotor bekannt, bei dem der Zylinder als unten offene Büchse ausgebildet und in einem Hohlzylinder derart angeordnet ist, dass die untere Kante des Zylinders von der unteren Stirnfläche des Hohlzylinders durch einen Ringspalt getrennt ist. Der im Oberbegriff des Anspruchs 1 definierte Totraum erstreckt sich somit um die untere Kante des Zylinders herum durch den eine Einschnürung bildenden Ringspalt in den Ringraum zwischen dem Zylinder und dem Hohlzylinder, welcher Ringraum somit eine grössere, dem Kolben ferne Kammer darstellt.

Es hat sich gezeigt, dass bei der bekannten Konstruktion bei Lastabwurf durch Bruch einer Sollbruchstelle im Bereich der Kolbenstange die im Totraum befindliche komprimierte Luft den Kolben auf so hohe Geschwindigkeit beschleunigen kann, dass dieser beim Aufprall an seinem oberen Anschlag den Zylinder wie auch die Laterne, über die er befestigt ist, zerstört, sofern nicht diese Teile weit über die für ihre normale Funktion nötigen Abmessungen hinaus dimensioniert sind. Ein solcher Lastabwurf kann z.B. auftreten, wenn der Stellmotor als Hilfsantrieb auf einem eigenmediumgesteuerten Ventil angeordnet ist, und dieses Ventil durch das Eigenmedium zu- und durch den Stellmotor aufgesteuert wird.

Es ist Aufgabe der Erfindung, auf einfache, kostengünstige und betriebssichere Weise bei Bruch der Sollbruchstelle eine Beschädigung des Zylinders oder seiner Befestigungsteile auszuschliessen.

Diese Aufgabe wird durch die im Kennzeichen des Anspruchs 1 aufgeführten Merkmale gelöst, indem der Mengenstrom der aus der grösseren, dem Kolben fernen Kammer dem Kolben zuströmenden Luft durch die genügend klein bemessene Drosselöffnung stark herabgesetzt wird, sodass sich hinter dem weichenden Kolben kein hoher, den Kolben stark beschleunigender Druck aufbauen kann.

Präzisierend sei hier ausgeführt, dass unter dem Begriff "Einschnürung" eine Verengung des Strömungspfades von der einen zur anderen Kammer des Totraumes verstanden ist, wobei diese Einschnürung beispielsweise durch eine oder mehrere, einander parallel- oder, nach Art eines Labyrinths, in Serie geschalteten Oeffnungen oder auch durch einen Leitungsabschnitt erzielt sein kann.

Erfindungsgemäss ist wesentlich, dass die Einschnürung als Ganzes, beispielsweise als Fläche F einer einzigen Oeffnung dargestellt, bezüglich des Strömungswiderstandes $\Delta p$ eines gegebenen durchströmenden Luftstroms sich gleich verhält wie ein idealer freier Querschnitt $F_{id}$, über dessen ganzer Fläche eine Parallelströmung der theoretisch erzeugbaren

Geschwindigkeit $v = \sqrt{\dfrac{2\Delta p}{\varrho}}$ herrscht, wobei mit $\varrho$ die zuström-seitige Dichte der Luft bezeichnet ist.

Zur Lösung der Erfindungsaufgabe ist bisher, gängigen Bremsmethoden entsprechend, vorgeschlagen worden, die "andere", dem genannten Totraum abgewandte Zylinderseite zur Bremsung des Kolbens zu benützen, indem die dort befindliche feste Oeffnung genügend klein gewählt wird. Durch eine solche Lösung kann wohl ein Aufschlagen des Kolbens vermieden werden, es baut sich jedoch unter dem Zylinderdeckel jener anderen Zylinderseite beim Anfahren des Kolbens ein sehr hoher Druck auf, der eine teure Verstärkung des Deckels bedingt. Ueberdies wirkt dieser hohe Druck auch auf die Befestigungsteile, beispielsweise eine Laterne und deren Verschraubungen, die ebenfalls überdimensioniert werden müssen.

Durch eine Verkleinerung der dem Kolben nahen Kammer lässt sich die Wirkung der Merkmale des Anspruchs 1 erheblich verstärken. Anspruch 2 gibt eine zweckmässige Bemessungsgrenze für das Volumen dieser Kammer.

Sofern der freie Querschnitt der Steuerventile etwa gleich gross oder grösser ist als jener der Drosselöffnung, bringen die Massnahmen nach Anspruch 3 den Vorteil, dass bei plötzlichem Oeffnen des mit der Druckmittelquelle verbundenen Steuerventils die Sollbruchstelle weniger hoch belastet wird.

Durch Anspruch 4 wird die auskragende Masse des Stellmotors vermindert, was sowohl hinsichtlich Erdbebensicherheit als auch hinsichtlich der bei Montage und Revision zu bewegenden Gewichte vorteilhaft ist.

Anspruch 5 beschreibt eine bezüglich des Gesamtgewichts der Anlage besonders günstige Lösung.

Die Erfindung wird nun an Hand der Zeichnung näher erläutert. Es zeigen:

Figur 1: einen schematisierten Schnitt durch ein eigenmediumgesteuertes Ventil mit einem erfindungsgemässen pneumatischen Stellmotor,

Figur 2: den pneumatischen Stellmotor nach Figur 1 stärker schematisiert,

Figur 3: ein zweites Ausführungsbeispiel, teils im Schnitt teils in Ansicht,

Figur 4: einen Schnitt durch einen abgewandelten pneumatischen Stellmotor nach der Erfindung.

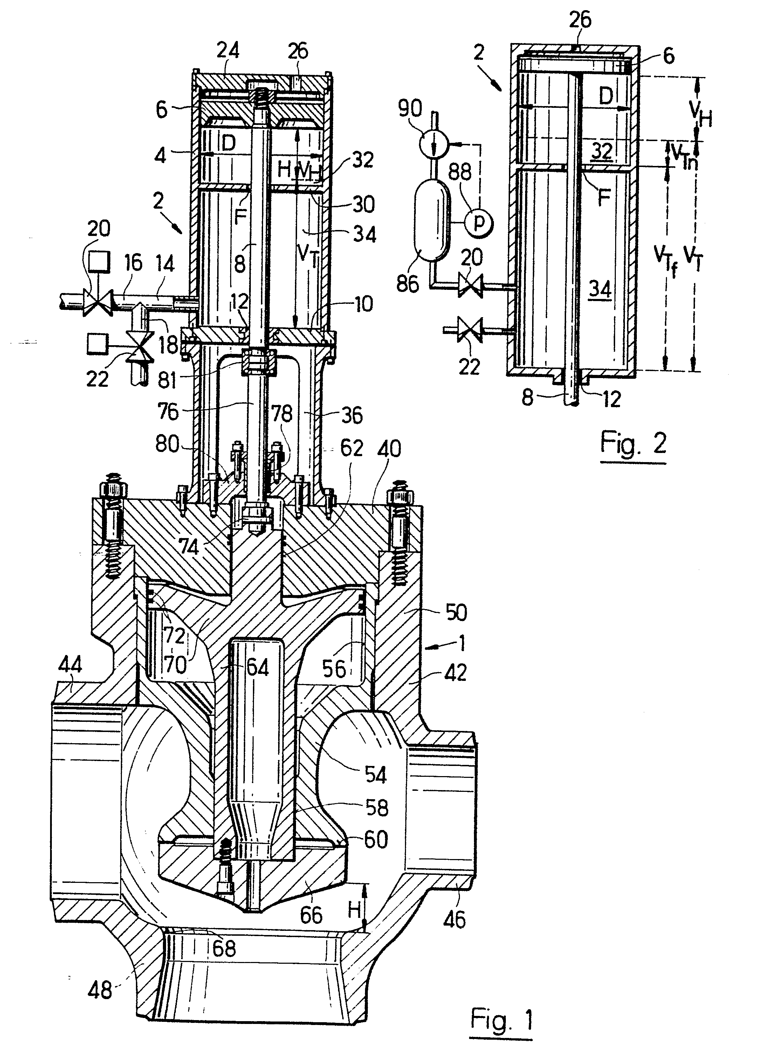

Figur 1 zeigt, auf einem eigenmediumgesteuerten Dampfisolierventil 1 angebracht, einen erfindungsgemässen pneumatischen Stellmotor 2. Dieser umfasst einen Zylinder 4 in dem ein Kolben 6 gleitbar angeordnet ist. Der Kolben 6 ist mit einer Kolbenstange 8 verbunden, welche die Stirnseite 10 des Zylinders 4 im Bereich einer Dichtung 12 durchdringt. Der Kolben 6 ist um einen Hub H verschiebbar. Bei einer Verschiebung um diesen Hub bestreicht die Kolbenfläche ein Hubvolumen $V_H$. An dieses Hubvolumen $V_H$ schliesst sich auf der einen Seite des Kolbens 6 ein Totraum vom Volumen $V_T$ an (vgl. Fig. 2). Im unteren Bereich des Zylinders 4 ist ein Stutzen 14 angeschlossen, der sich gabelt und in den Zweigleitungen 16, 18 je ein Magnetventil 20 bzw. 22 aufweist. Die Magnetventile 20, 22 sind an einer nicht gezeichneten Druckmittelquelle bzw. an einer Druckmittelsenke angeschlossen. Als Druckmittelsenke kann der den Stellmotor 2 umgebende Raum von Atmosphärendruck verstanden sein. Der Stirnseite 10 gegenüber trägt der Zylinder 4 einen Zylinderdeckel 24 mit einer Oeffnung 26.

Im Bereich des Totraums $V_T$ des Zylinders 4 ist eine Zwischenwand 30 angeordnet, die in diesem Totraum eine Einschnürung bildet, da sie den Querschnitt des Zylinders 4 bis auf eine die Kolbenstange 8 umgebende Ringfläche F verengt. Durch die Zwischenwand 30 wird der Totraum $V_T$ in eine kleine, dem Kolben 6 nahe Kammer 32 und in eine grössere, dem Kolben 6 ferne Kammer 34 unterteilt. Erfindungsgemäss überschreitet die Ringfläche F eine bestimmte, vom Zylinderdurchmesser D abhängige Fläche nicht. Sie ist nämlich bezüglich des Widerstandes eines gegebenen Mengenstromes durchströmender Luft einem freien Querschnitt von nicht mehr als 0,02 $D^2$ gleichwertig.

Der Zylinder 4 ist über eine Laterne 36 auf einem Deckel 40 des eigenmediumgesteuerten Ventils 1 befestigt. Dieses Ventil 1 besteht aus einem Gehäuse 42 mit einem Eintrittstutzen 44, einem Durchgangstutzen 46, einem Austrittstutzen 48 und einem Deckelstutzen 50. Im Deckelstutzen 50 sitzt, am Deckel 40 angeschraubt, ein Einsatz 54, der eine zylindrische Gleitfläche 56, eine zylindrische Führungsfläche 58 und eine Rücksitzfläche 60 aufweist. Im Deckel 40 ist eine axiale Bohrung 62 vorgesehen. In der Bohrung 62 und der Führungsfläche 58 ist eine Ventilspindel 64 gleitbar gelagert. Sie trägt an ihrer einen Stirnfläche ein Verschlussteil 66, das mit einer Sitzfläche 68 am Austrittstutzen 48 zusammenwirkt. Auf der Ventilspindel 64 sitzt ein Kolben 70, der mit Kolbenringen 72 die zylindrische Gleitfläche 56 dichtend berührt.

Am im Deckel 40 gelagerten Ende der Ventilspindel 64 ist über einen eine Sollbruchstelle bildenden Scherbolzen 74 eine Zwischenstange 76 befestigt. Diese Zwischenstange 76 durchdringt, durch eine Stopfbüchse 78 gedichtet, einen die Bohrung 62 überbrückenden Deckel 80. Die Zwischenstange 76 ist über eine Ventilkupplung 81, die aus zwei Halbschalen mit beidseitigem Bund besteht, mit der Kolbenstange 8 gekuppelt.

Das eigenmediumgesteuerte Ventil 1 ist mit nicht gezeichneten Verbindungskanälen und Steuerventilen, wie solche beispielsweise in der europäischen Patentanmeldung 81 100 602.2 beschrieben sind, versehen.

Die Einrichtung funktioniert wie folgt: Soll im Normalbetrieb das eigenmediumgesteuerte Ventil 1, das vom Eintrittstutzen 44 zum Austrittstutzen 48 durchflossen sei, geschlossen werden, so wird der Zylinderraum unterhalb des Kolbens 70 über nicht gezeichnete Kanäle entlastet. Es strömt dabei über ebenfalls nicht gezeichnete Kanäle durchfliessendes Eigenmedium aus dem Bereich des Stutzens 44 in den Zylinderraum oberhalb des Kolbens 70. Das bewegliche System 64, 66, 70 des Ventils 1 senkt sich, bis der Verschlussteil 66 auf der Sitzfläche 68 dichtend aufliegt. Der Kolben 6 des Stellmotors 2 verschiebt sich dabei bei offenem Ventil 22 um den Hub H. Für den Fall, dass nun die Anlage abgestellt wird und hernach, bei drucklosem Eigenmedium, das Ventil 1 geöffnet werden soll, dient der pneumatische Stellmotor. Das die Verbindung zur nicht gezeichneten Druckmittelquelle kontrollierende Ventil 20 wird geöffnet, so dass Luft, von beispielsweise 6 bar Druck, in den Zylinderraum unterhalb des Kolbens 6 einströmt. Durch diesen Druck wird das gesamte bewegliche System 6,8,76,64,70,66, angehoben und somit das Ventil 1 geöffnet. Wird nun das Eigenmedium im Ventil 1 auf Druck gebracht und hernach, zum Beispiel durch einen nicht gezeichneten Sicherheitsmechanismus, der Zylinderraum unterhalb des Kolbens 70 entlastet, so fährt das Ventil in Schliessstellung, wobei der Kolben 6 des pneumatischen Stellmotors 2 in seine untere Hubendlage gezogen wird. Um sicherzustellen, dass bei geschlossen ungewollt bleibenden Magnetventilen 20 und 22 durch die Kompression unterhalb des Kolbens 6 sich kein zu hoher Druck bildet, ist der Totraum $V_T$ so gross bemessen, dass ein Druck von 12 bar nicht überschritten werden kann. Nun ist es nicht mit genügender Sicherheit auszuschliessen, dass bei einer solchen Operation der Scherbolzen 74 bricht. Die potentielle Energie der im Totraum $V_T$ gespeicherten Druckluft treibt in einem solchen Fall den Kolben 6 nach oben gegen den Zylinderdeckel 24. Der Kolben 6 würde dabei eine hohe Geschwindigkeit annehmen, und die in der bewegten Kolbenmasse gespeicherte kinetische Energie würde zur Zerstörung des Deckels 24, gegebenenfalls auch weiterer Teile des Stellmotors 2 und/oder der Laterne 36 führen, wenn nicht die Einschnürung F als enge Drosselöffnung ausgebildet wäre, die den Luft-Mengenstrom aus der dem Kolben fernen Kammer in die dem Kolben nahe Kammer genügend drosseln würde.

In Figur 2 ist der Stellmotor 2, stärker schematisiert und daher übersichtlicher, noch einmal dargestellt, wobei die Bezeichnungen aus Figur 1 übernommen sind. Das Ventil 20 ist dort mit einem Druckmittelbehälter 86 verbunden, der nach Bedarf, über eine von einem Druckgeber 88 gesteuerte, Luft aus der Atmosphäre ansaugende Pumpe 90 aufgeladen wird. Das Ventil 22 führt direkt zur Atmosphäre. Die Oeffnung 26 im Zylinderdeckel 24 ist so bemessen, dass auch im oberen Zylinderraum ein möglichst hoher Anteil der von der komprimierten Luft des Totraums dem Kolben 6 vermittelten Energie aufgenommen wird, ohne dass jedoch der Druck in diesem Raum erheblich über den aus anderen Gründen gewählten Konstruktionsdruck von etwa 15 bar ansteigt.

Die Wirkung der erfindungsgemässen Einschnürung kommt nur dann voll zur Geltung, wenn die dem Kolben nahe Kammer einen nur kleinen Teil des gesamten Totraums $V_T$ umfasst. Es ist zweckmässig, das Volumen $V_{Tn}$ der nahen Kammer 32 auf 10% des Totraumvolumens $V_T$ zu limitieren.

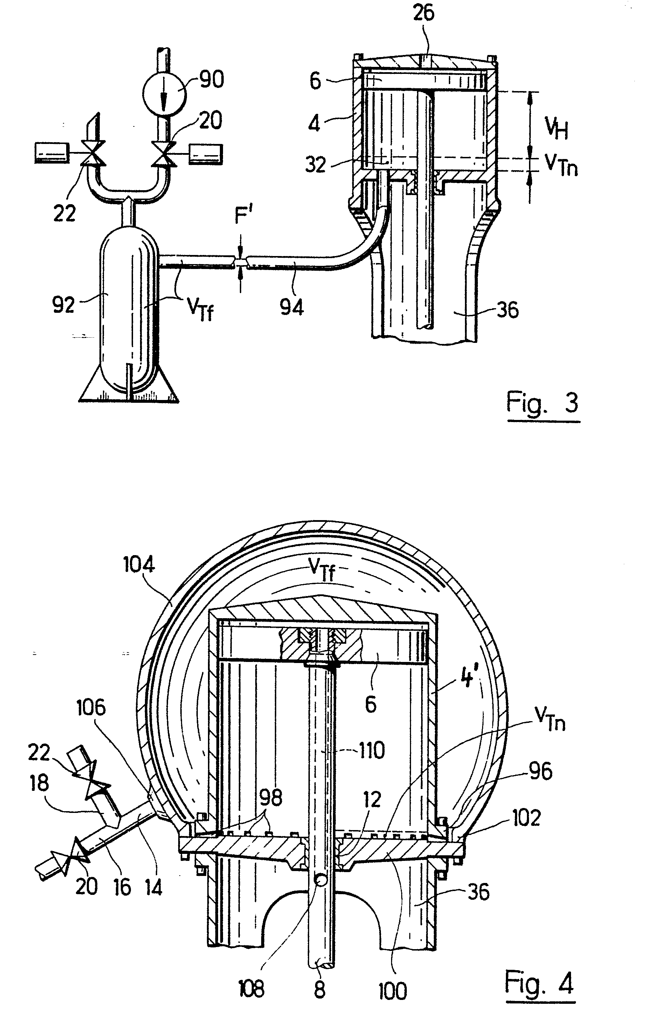

Im Ausführungsbeispiel nach Figur 3 ist das Volumen $V_{Tf}$ der dem Kolben 6 fernen Kammer in einem separat aufgestellten Druckbehälter 92 untergebracht. Dieser ist über eine Leitung 94 des lichten Querschnitts F' mit der dem Kolben 6 nahen Kammer 32 des Zylinders 4 verbunden. Die Leitung 94 bildet die erfindungsgemässe Einschnürung zwischen den beiden Kammern 32 und 92 der Volumina $V_{Tn}$ bzw. $V_{Tf}$. Ihr lichter Querschnitt F' ist auf ihre Länge so abgestimmt, dass sie der im Kennzeichen des Anspruchs 1 festgelegten Bedingung entspricht: Sie ist so weit, dass beim relativ langsamen eigenmediumgesteuerten Schliessen des Ventils 1 der Druck im Zylinder 4 beispielsweise nicht über 12 bar steigt, dass aber andrerseits bei Bruch des die Sollbruchstelle darstellenden Scherbolzens 74 die im Druckbehälter 92 befindliche Luft am Kolben 6 nur genügend stark gedrosselt zur Wirkung kommen kann.

Die Anordnung nach Figur 3 gestattet, die auf dem eigen-/mediumgesteuerten Ventil 1 aufzubauende Masse des Stellmotors klein zu halten.

Im Ausführungsbeispiel nach Figur 4 sitzt der Kolben 6 in einem pfannenartig an einer Stirnfläche verschlossenen Zylinder 4'. Der Zylinder 4' weist einen Flansch 96 mit radialen Nuten 98 auf und ist über diesen Flansch auf einem ebenen Deckel 100 festgeschraubt, der eine zentrale Schiebedichtung 12 für die Kolbenstange 8 aufweist. Mit radialem Abstand ist ausserhalb des Flansches 96 auf dem Deckel 100 ein mit einem Flansch 102 versehener leichter Kugeldruckbehälter 104 dicht angeschraubt. An einem Auge 106 des Kugeldruckbehälters 104 ist der Stutzen 14 mit den Zweigen 16 und 18 angebracht, in denen die beiden Ventile 20 und 22 angeordnet sind.

Die Kolbenstange 8 weist vom einen den Kolben 6 durchdringenden Ende bis zu einer Querbohrung 108 eine Längsbohrung 110 auf, die zusammen mit der Querbohrung 108 die Funktion der Oeffnung 26 in Figur 3 übernimmt.

Bei dieser Anordnung ist die Einschnürung durch die radialen Nuten 98 und den anschliessenden ringförmigen Spalt zwischen den Flanschen 96 und 102 dargestellt. Die Lösung nach Figur 4 ist konstruktiv einfach, die Fläche F der Einschnürung lässt sich durch Wahl anderer Abmessungen der Nuten 98 leicht verstellen, und vorallem ist der Druckbehälter leicht und der Schwerpunkt des Stellmotors dem eigenmediumgesteuerten Ventil nahe, was bezüglich Erdbebensicherheit von Vorteil ist.

Patentansprüche

1. Pneumatischer Stellmotor, insbesondere als Hilfsantrieb zu einem Dampfisolierventil, mit in einem Zylinder gleitbar angeordnetem Kolben und an diesem befestigter, mindestens eine der Stirnflächen des Zylinders durchdringender, mit einer abwerfbaren Last verbundener Kolbenstange, wobei auf der einen Zylinderseite ein Totraum vorgesehen ist, der grösser ist als das angrenzende, vom Kolben bestrichene Hubvolumen, wobei ferner der Totraum über je ein Steuerventil mit einer Druckmittelquelle und einer Druckmittelsenke und die andere Zylinderseite über mindestens eine feste Oeffnung mit einer Druckmittelsenke verbunden ist und wobei der genannte Totraum durch eine Einschnürung in eine kleinere, dem Kolben nahe Kammer, und eine grössere, dem Kolben ferne Kammer unterteilt ist,
dadurch gekennzeichnet,
dass die Einschnürung als Drosselöffnung ausgebildet ist, die bezüglich Widerstand eines gegebenen Mengenstroms durchströmender Luft einem freien Querschnitt von nicht mehr als $F_{id}=0,02D^2$ gleichwertig ist, wobei unter D der Durchmesser des Zylinders verstanden ist.

2. Pneumatischer Stellmotor nach Anspruch 1, dadurch gekennzeichnet, dass das Volumen der dem Kolben nahen Kammer nicht mehr als 10% des Totraumvolumens beträgt.

3. Pneumatischer Stellmotor nach einem der Ansprüche 1 und 2, dadurch gekennzeichnet, dass mindestens eines der Steuerventile an der dem Kolben fernen Kammer des Totraums angeschlossen ist.

4. Pneumatischer Stellmotor nach einem der Ansprüche 1 bis 3, dadurch gekennzeichnet, dass die dem Kolben ferne Kammer des Totraums vom Zylinder getrennt angeordnet und mit diesem über eine Rohrleitung verbunden ist.

5. Pneumatischer Stellmotor nach einem der Ansprüche 1 bis 4, dadurch gekennzeichnet, dass eine den Totraum aussen begrenzende Wand die Zylindermantelfläche und eine Stirnfläche des Zylinders aussen umgibt und die feste Oeffnung der dem Totraum abgewendeten Seite des Zylinders als Längsbohrung durch einen Abschnitt der Ventilspindel verläuft.

0088819

Fig. 2

Fig. 1

Fig. 3

Fig. 4

### Europäisches Patentamt

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | FR-A-2 423 704 (ROCKWELL) | | F 01 D 17/14 |
| | | | F 16 K 47/00 |
| | | | F 16 K 31/122 |
| | --- | | |
| A | DE-A-2 510 341 (NOVAK) | | |
| | --- | | |
| A | DE-A-2 710 527 (LAURER) | | |
| | --- | | |
| A | DE-B-1 263 432 (MOIROUX) | | |
| | ----- | | |

**RECHERCHIERTE SACHGEBIETE (Int. Cl. ³)**

F 01 D 17/00
F 16 K 47/00
F 16 K 31/00

Der vorliegende Recherchenbericht wurde für alle Patentansprüche erstellt

| Recherchenort DEN HAAG | Abschlußdatum der Recherche 14-06-1983 | Prüfer VERELST P.E.J. |
|---|---|---|